# EUROPEAN PATENT APPLICATION

(11) **EP 3 518 154 A1**
(43) Date of publication of application: **31.07.2019**
(21) Application number: 17755044.9
(22) Date of filing: 10.03.2017
(51) Int. Cl.: G06Q 10/00

(54) **GREEN PRODUCT MANAGEMENT SYSTEM AND METHOD**

(30) Priority: 19.09.2016 CN 201610830890
(71) Applicant: BOE Technology Group Co., Ltd., Beijing Anhui 100015 (CN); Beijing BOE Display Technology Co., Ltd., Beijing 100176 (CN)
(72) Inventor: FANG, Mili, Beijing 100176 (CN); CAI, Pei, Beijing 100176 (CN); SHEN, Yi, Beijing 100176 (CN); WU, Xianping, Beijing 100176 (CN); JIAO, Wenliang, Beijing 100176 (CN); LI, Jianghao, Beijing 100176 (CN); JU, Fenglong, Beijing 100176 (CN)
(74) Representative: Gesthuysen Patent- und Rechtsanwälte
(86) International application number: PCT/CN2017/076261
(87) International publication number: WO 2018/049796

(57) **Abstract**

A computer-implemented green product management system and method are proposed. The system comprises: a database, a restricted-substance management module and a carbon footprint module. The database is configured to store data required by the restricted-substance management module and the carbon footprint module. The restricted-substance management module comprises: a detection module, configured to detect restricted-substance containing condition of a raw material and all contacted auxiliary consumptive materials in a production process of a product; and a determination module, configured to determine, according to a restricted-substance related predetermined criterion, and based on a detection result of the detection module and data in the database, whether the product conforms to the restricted-substance related predetermined criterion. The carbon footprint module comprises: a data collection module, configured to collect raw material and production process data related to carbon footprint calculation; and a carbon footprint analysis module, configured to obtain, based on the collected raw material and production process data, and combined with the data in the database, a carbon footprint in each production process and a carbon footprint of each component of the product.

## Description

### RELATED APPLICTION

The present application claims priority of a Chinese patent application numbered 201610830890.8 filed on September 19, 2016, all contents of which are incorporated into this text by reference.

### TECHNICAL FIELD

The present application relates to a green product management system and method, particularly to a systematic and whole process management to the restricted substance and the carbon footprint.

### BACKGROUND

With the awakening and rising awareness of environmental protection, all countries in the world pay attention to the sustainable development of the environment in their production and life. The keywords such as environmental protection, green have become people's new focus of attention to the product. This involves the solid material composition in the product and also involves the carbon emission problem in production and use. The developed countries all spend money to buy carbon emission power and increase the environment standard of the product, the importance of which is remarkable. In order to help the environment we live in to realize sustainable development feasibly and effectively, it seems particularly important to use strong environmental protection monitoring system to provide protection in the production process.

The currently used green and environmental product management is not systematic and accurate enough, it even can only rely on the artificial experience and cannot provide large-scale reliable management in complex situations, which will bring potential crisis to the enterprise.

### SUMMARY

Therefore, a solution that can solve at least one of the above problems is required.

According to an aspect of the present application, a computer-implemented green product management system is provided, characterized in that: the management system comprises a database, a restricted-substance management module and a carbon footprint module, wherein: the database is configured to store data required by the restricted-substance management module and the carbon footprint module, wherein the data required by the restricted-substance management module comprises an accessory disassembly attribute, an accessory weight, an accessory name, a homogeneous material weight after disassembly, a homogeneous material name after disassembly, base and coating properties, the data required by the carbon footprint module comprises a distance between a product manufacturing place and an accessory manufacturing place, a transport manner of the accessory, whether the accessory is recyclable, carbon emission base data of basic energy sources in producing countries of the accessory and the product; the restricted-substance management module comprises: a detection module, configured to detect restricted-substance containing condition of a raw material and all contacted auxiliary consumptive materials in a production process of a product; and a determination module, configured to determine, according to a restricted-substance related predetermined criterion, and based on a detection result of the detection module and data in the database, whether the product conforms to the restricted-substance related predetermined criterion; and the carbon footprint module comprises: a data collection module, configured to collect raw material and production process data related to carbon footprint calculation; and a carbon footprint analysis module, configured to obtain, based on the collected raw material and production process data, and combined with the data in the database, a carbon footprint in each production process and a carbon footprint of each component of the product.

According to another aspect of the present application, a computer-implemented green product management method is provided, characterized in that: the method is for use in a green product management system, the green product management method comprises: detecting restricted-substance containing condition of a raw material and all contacted auxiliary consumptive materials in a production process of a product; determining, according to a restricted-substance related predetermined criterion, and based on a detection result and data in the database, whether the product conforms to the restricted-substance related predetermined criterion; collecting raw material and production process data related to carbon footprint calculation; and obtaining, based on the collected raw material and production process data, and combined with the data in the database, a carbon footprint in each production process and a carbon footprint of each component of the product; wherein the database is configured to store data required by the restricted-substance management and the carbon footprint analysis; wherein the data required by the restricted-substance management comprises an accessory disassembly attribute, an accessory weight, an accessory name, a homogeneous material weight after disassembly, a homogeneous material name after disassembly, base and coating properties, the data required by the carbon footprint analysis comprises a distance between a product manufacturing place and an accessory manufacturing place, a transport manner of the accessory, whether the accessory is recyclable, carbon emission base data of basic energy sources in producing countries of the accessory and the product.

The summary of the invention is provided to introduce in a simplified form the selection of concepts to be further described in the specific embodiments below. This summary is neither aimed at identifying key features or essential features of the claimed subject matters, nor aimed at being used to help determining the scope of the claimed subject matters.

The green product management system and method according to the present application can provide all life cycle and systematic environmental monitoring and protection, can provide large-scale reliable management in complex situations, and helps to accurately ensure that the product meets the standards.

### BRIEF DESCRIPTION OF THE DRAWINGS

Now, the present application will be described more specifically with reference to the drawings below, in the drawings:
Fig. 1 exemplarily draws a block diagram of a green product management system 100 according to one or more embodiments of the present application;

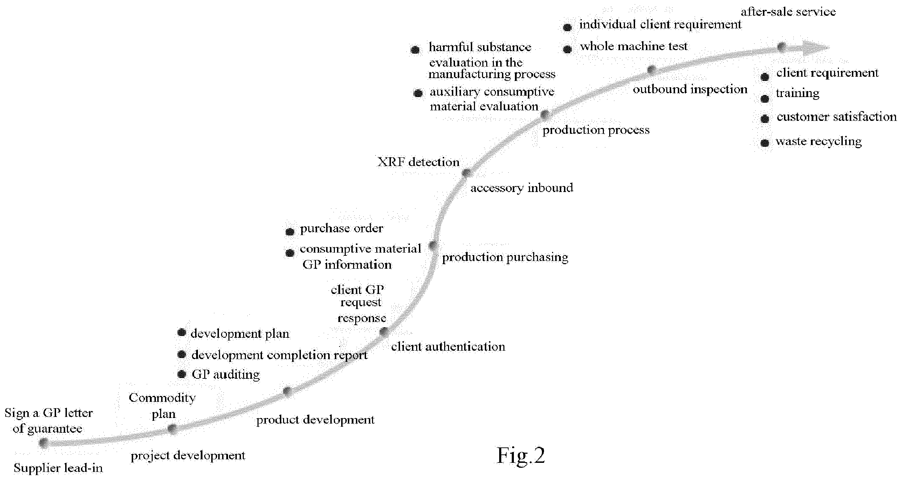

Fig. 2 shows phases of the whole process of product development;
Fig. 3 exemplarily draws a working flow chart of green product management according to one or more embodiments of the present application.

### DETAILED DESCRIPTION

Next, the embodiments of the present application will be described more sufficiently with reference to the drawings, in which drawings the embodiments of the present application are shown. However, the present application can be carried out in various forms, and the present application should not be understood as being limited to the embodiments expounded here. In the whole text, similar reference signs are used to represent similar elements.

The terms used here are only used for describing particular embodiments, rather than intending to limit the present application. As used here, "one", "this" in singular forms intend to also include plural forms, except where the context otherwise indicates clearly. It should also be understood that when being used here, the term "comprise" specifies presence of the declared features, entirety, steps, operations, elements and/or components, but not excluding presence or addition of one or more other features, entirety, steps, operations, elements, components and/or groups thereof.

Unless otherwise specified, the terms (including technical terms and scientific terms) used here have the same meanings that are commonly understood by the ordinary skilled person in the art to which the present application belongs. The terms used here should be interpreted as having meanings consistent with those in the context of this Specification and the related field, and should not be interpreted in an idealized or overly formal sense, unless so expressly defined here.

Next, the present application will be described with reference to the drawings that show the method and device (system) according to the embodiments of the present application. It should be understood that the present application can be carried out using hardware and/or software (including firmware, resident software, microcode etc.). Further, the present application can use the form of a computer usable computer program product or a computer program product on the computer readable storage medium, which has computer usable or computer readable program codes that are implemented in the medium, so as to be used by an instruction execution system or be used in conjunction with the instruction execution system. In the context of the present application, the computer usable or computer readable medium can be any medium, which can contain, store, communicate, transmit, or transfer programs, so as to be used by the instruction execution system, apparatus or device, or be used in conjunction with the instruction execution system, apparatus or device.

The restricted substances mentioned in this disclosure refer to substances that are restricted to use according to laws and regulations, department rules, enterprise custom rules etc., which include substances that are harmful to the environment.

Next, the technical solutions provided by embodiments of the present application will be described in detail in conjunction with the drawings.

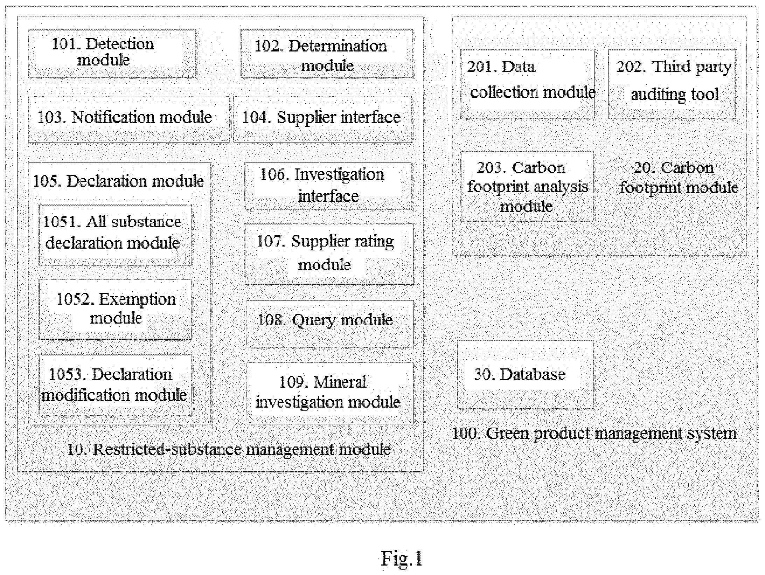

According to an embodiment of the present application, a green product management system is proposed. Fig. 1 exemplarily draws a block diagram of a green product management system 100 according to one or more embodiments of the present application. The green product management system 100 as shown in Fig. 1 comprises a restricted-substance management module 10, a carbon footprint module 20 and a database 30.

In some embodiments, the database 30 is configured to store data required by the restricted-substance management module 10 and the carbon footprint module 20. The data required by the restricted-substance management module 10 comprises an accessory disassembly attribute, an accessory weight, an accessory name, a homogeneous material weight after disassembly, a homogeneous material name after disassembly, base and coating properties. The data required by the carbon footprint module comprises a distance between a current position (a product manufacturing place) and an accessory manufacturing place, a transport manner of the accessory, whether the accessory is recyclable, carbon emission base data of basic energy sources in producing countries of the accessory and the product. It needs to be noted that the database 30 can exist independent of the restricted-substance management module 10 and the carbon footprint module 20, and can also partly or completely exist in the restricted-substance management module 10 and the carbon footprint module 20 respectively, so as to store and provide the required data for each module.

In some embodiments, the restricted-substance management module 10 comprises: a detection module 101, configured to detect restricted-substance containing condition of a raw material and all contacted auxiliary consumptive materials in a production process of a product; and a determination module 102, configured to determine, according to a restricted-substance related predetermined criterion, and based on a detection result of the detection module and data in the database, whether the product conforms to the restricted-substance related predetermined criterion.

In some embodiments, the detection module can be an X-ray fluorescence analyzer (XRF) being capable of identifying whether there is a restricted substance and obtaining a content of each restricted substance. The green product management system (hereinafter referred to as the system) has the function of automatically collecting and analyzing the restricted-substance detection result of the raw material. The system can grab the XRF detection result automatically and collect detection data within a period of time. The incoming XRF detection data grabbed by the system can be managed according to the accessory name and the test time, and a pie chart can be drawn according to the detection result of each accessory for the administrator account to query. The administrator account can select a period of time, so as to enable the system to output all test results and the test result tendency chart within this period of time. The administrator can query the detection results of all accessories under the bill of material (BOM) of a product of a certain model, and can derive all detection data. The data grabbed by the system includes batch number of incoming product, operator, factory, test time. The administrator account can select these key information for query. This query-related function will be implemented in conjunction with the query module 108 to be mentioned below. By automatically grabbing data and analyzing data, the system can analyze the quality performance of the incoming restricted substance within a period of time, and observe the quality of each supplier and each material, so as to provide management basis for the incoming quality management personnel. For example, the administrator can learn some samples exceeding the standard from the analysis result, which can be marked with striking colors (e.g., red), for example, marked as "N.G.", while the samples not exceeding the standard are marked with a default color, for example, marked as "O.K.".

In some embodiments, the restricted-substance management module 10 comprises a notification module 103. The notification module 103 can release an up-to-date notice to the user particularly the supplier for the supplier to download. The notification module can also implement the function of collecting information such as the download condition of the suppliers, and can send a reminder mail to the suppliers who do not view the notice to remind them. Alternatively, after the notice is released, the system can send a notification mail to the mailbox of the supplier automatically, the content of the mail is exactly the content of the notice. Generally speaking, the publisher of the notice has the rights to delete and edit. The content of the notice can include laws and regulations as well as relevant industry events, which are pushed to the supplier in classifications of "regulation" and "notification" respectively.

In some embodiments, the restricted-substance management module 10 further comprises a supplier interface 104. As the term suggests, the supplier interface 104 is mainly an interface for the supplier to access, the notice released by the notification module 103 to the supplier as mentioned previously can exactly presented to the supplier through this interface. Specifically and exemplarily, the supplier interface 104 mainly comprises a to-do task component. Specifically and exemplarily, the to-do task component comprises an unread mail component, an unread notice component, a detection report update, a to-declare component, a company basic information component, a rejected component and a pending questionnaire component and so on. Particularly, we present the notice to the user in a remarkable way in the supplier interface, for example, presenting the regulations and notifications newly pushed by the notification module 103 to the user with a dedicated interface area.

Each component selected will generate a corresponding interface to be presented to the supplier. For example, the company basic information component is selected, the interface including the following information will be presented: supplier code, official number, supplier name, total staff, direct dealer, telephone, facsimile, zip code, URL, mailbox, founding time, business term, VAT No., frozen or not, language, address, qualification information (including whether it has various authentications, e.g., QC080000, IS014000, ISO14064, TS16949, and whether it has an XRF device), auditing information such as the auditor and the auditing state and the like.

In some embodiments, the supplier also has to make use of the supplier interface 104 to declare the in-plant detection device information, including device name, model, quantity, and brand. In addition, it is further required to declare the plant information. The supplier has to upload various letters of guarantee and qualification documents for the purpose of filing and auditing. Generally, all information entered or uploaded by the supplier can be stored or submitted.

Generally, the supplier has an administrator account for the supplier interface, and the administrator account can create multiple sub-accounts, each sub-account logs in the system independently and performs related operations under this account. The supplier administrator account has the administration authority to each sub-account, including functions of creating, deleting, disabling, enabling etc.

In some embodiments, the restricted-substance management module 10 comprises a declaration module 105, generally speaking, it is configured to declare by the supplier the data required by the restricted-substance management module 10 and/or the data required by the carbon footprint analysis module 203. Exemplarily and specifically, the supplier can use this module to create its own new accessories, and input corresponding information and report under each new accessory. In an example, the types of the accessories supplied have to be declared, the types including: homogeneous accessories (homogenous substances that can be obtained without being disassembled again); primary disassembly accessories (accessories that can obtain homogeneity by being disassembled once); secondary disassembly accessories (accessories that can obtain homogeneity by being disassembled twice). The weights, names, serial numbers of the accessories have to be declared. If the supplier is the agent, the agent has to declare the name of the manufacturer.

In some embodiments, after the supplier creates a new accessory, unlimited disassembly can be performed under the accessory until it is disassembled into a homogeneous substance. Exemplarily, each component consists of one or several sub-components, it is required to declare the names and the amount of the sub-components, as well as the attributes of the homogeneity obtained from final disassembly. After the accessory is disassembled into homogeneity, the supplier has to declare information such as the homogenous material name, the homogenous material subdivision, the homogenous material type, whether it is a recyclable material, the material weight, whether the material belongs to the base or the coating, the actual test content of each restricted substance. The supplier declares whether it is a recyclable material in order to take it as the data basis for the carbon footprint calculation and the recycling information. The supplier has to choose whether the material is the coating or the base, for the convenience of the auditor to determine whether complete information has been provided. The system provides a column for filling in the actual test content in the test report. When the supplier inputs the test result in this column, the system will determine based on the set limits whether the test value of the accessory of the supplier meets the requirement of the auditing department and whether it is below the limits of management and control.

The homogenous material type declared by the supplier is selected from the type list provided by the system, exemplarily, the classification can include plastics, metal, glass, paper, wood, rubber, gas etc., and each classification can have various subdivision materials. The supplier can select the corresponding material type in the subdivision items after selecting the large class.

In one or more embodiments, the declaration module 105 comprises an all substance declaration module 1051, wherein the all substance declaration ingredient proportion has to exceed 95%, in order to protect the technical secret, a small part of confidential ingredient is allowed. All substance declaration module provides the name of the selected substance, CAS No. (the CAS No. is a registration number made by the Chemical Abstracts Service for the chemical substances, this number is an important tool for retrieving information of a chemical substance with a plurality of names, and is a unique digital identification number of a certain substance (compound, polymers, biological sequences, mixture or alloy) and EC No. (the EC NO. originally refers to the EINECS number), which is a set of registration numbers given to each chemical substance for commercial use in European Union from July 1, 1971 to September 18, 1981. This system was created according to the Hazardous Substances Directive 67/548/EEC. It was prescribed that the EINECS number must be given clear indication on the label and the package of the hazardous article. This catalogue was replaced by ELINCS from September 19, 1981. All "new" substances that enter the Euro-market will be assigned with an ELINCS number after being reported to the European Commission. The ELINCS number must be printed on the package and the label. Nowadays, people generally call "EINECS/ELINCS number" as the column of the EC No., for specifying the specific substance, and a column of the content percentage is also provided for the supplier to input. In addition, the supplier can query the specific information of the ingredients and reset the information by inputting the name of the ingredients or the CAS No..

The administrator needs to manage the CAS No. and the EC No. of all controlled substances. When the ingredients declared by the supplier include the controlled substances, the system has the prompting function when the administrator account is checking the CAS No, for example, the displayed font color or size will be highlighted.

Further, the declaration module 105 comprises an exemption module 1052. The definition of exemption is, when the current system for example limits existence or amount of existence of a certain substance according to the provisions of the laws and regulations and/or the self-defined rules, however, it is difficult to eliminate or reduce the existence of this substance technically or economically, it is allowed to contain this substance in the product or break through the content limit of this substance, i.e., exempting the system's limit to this substance.

When a certain restricted substance inputted by the supplier fails to comply with the provisions, the supplier needs to select a corresponding exemption term in the exemption column. The system provides columns for uploading the test report and the corresponding material specification. The auditor needs to evaluate the material based on the actual report. The restricted substances are classified into prohibited substances (namely, substances not allowed to use) and declared substances (substances whose usage is limited and that have to be declared). For exemption of the prohibited substance, the system is required to provide the test report of the substance, and for exemption of the declared substance, it is not required to provide the test report of the substance, however, the supplier has to declare whether this declared substance is contained and the content thereof.

In an example, the supplier can determine exemption by querying the homogenous data and selecting therefrom. For example, the substance can be queried through a plurality of entrances (e.g., grade, managed material category, CAS NO. and name etc.), then it is selected and determined.

Further, the declaration module 105 comprises a declaration modification module 1053. When the supplier changes the material, it needs to modify the accessory information that has been approved. The supplier can perform the modification operation of the declaration through the system, modify the related information of the accessory that has been approved and submit it again. After the supplier modifies the information of the accessory that has been approved, the system will inform the administrator account of the related information automatically, and make a special mark to the accessory until the accessory is submitted again.

In some embodiments, the restricted-substance management module 10 further comprises an investigation interface 106, configured to issue an investigation request to the supplier and check a response from the supplier by an administrator. The setting of this module can facilitate the administrator to perform restricted substance investigation at the supply chain before certain laws and regulations come into force. Exemplarily, the administrator inputs the title of the investigated information and the description of the investigated content at the investigation interface. Further, the investigation interface 106 can also provide the CAS No. option of the investigated substance and specify the specific investigated substance for the administrator. Generally, the investigation interface 106 can provide edit rights of the investigation module for the administrator. The investigated content can be modified at any time before the official release. After the administrator edits the investigated content, the investigated content can be released officially. Then, the system sends an investigation notification mail to each account under all suppliers according to the contact information of the suppliers as default. The system performs statistics to the suppliers that have received the investigation and the suppliers that have not respond to the investigation automatically. The administrator can view the information of the related suppliers.

In some embodiments, the restricted-substance management module 10 further comprises a supplier rating module 107. The administrator can use the statistic function of the system to evaluate the performance of the supplier as the annual evaluation criteria of the supplier. In an example, the evaluation index can include six dimensions of material risk level, supplier qualification, investigation response speed, report veto ratio, XRF feed exceeding record, whether a false report is provided.

Take 10 points for full marks, each rated item is scored according to certain proportion and evaluation criteria. The scoring process is performed by the system, and the scoring period is set by the administrator.

Details of an evaluation criterion are given below, which is aimed at helping understanding of the present invention rather than limitation. The material risk rating is divided into three levels of high, medium and low. The high risk materials refer to materials where the restricted substance exceeding risk may occur easily, including plastics, electronics, labels etc.; compared to the high risk materials, the medium risk materials refer to materials where the restricted substance exceeding risk may not easily occur, such as glass, wood, paper etc.; the low risk materials refer to materials where the restricted substance exceeding risk does not occur generally, such as liquid crystal, target material, pure metal etc. The supplier qualification is divided into three levels of high, medium and low. The qualification is inspected according to the number of employees and registered capital, a high score can be obtained if either the number of employees or the registered capital reaches the high level. Exemplarily, it is high level if the number of employees is greater than 200, it is medium level if the number of employees is 50-199, it is low level if the number of employees is less than 50; it is high level if the registered capital is larger than ten million, it is medium level if the registered capital is 1∼10 million, it is low level if the registered capital is less than 1 million. The investigation response speed is scored according to the response speed of the supplier, starting from the date of initiating the investigation by the administrator account, the supplier who makes response within one day get the highest score, the score of the supplier who makes response within 2-4 days takes the second place, the score of the supplier who makes response after 5 days is zero. The system performs statistics to the response speed of the supplier automatically and scores the supplier at the backstage. The report veto ratio represents the accuracy of the report uploaded by the supplier, and the proportion of the accessories vetoed within a single account of the supplier in all accessories is taken as the evaluation basis, for example, the score is highest if less than 10% accessories are vetoed, the score takes the second place if the proportion is between 10% and 30%, the score is zero is the proportion is larger than 30%. The XRF feed exceeding record represents the restricted substance spot check performance of the inbound product. Generally, for all suppliers, the incoming materials thereof all accept the restricted substance spot check. Exemplarily, if it is found in the spot check that the phenomenon of exceeding standard occurs more than twice (including twice), the score of this item is 0. The score is 1 is it is found once. The score is the highest if the restricted substance exceeding accident is never found. The case of providing a false report refers to authenticity of the report when the supplier submits the accessory test report. Exemplarily, if it is found that the report provided by the supplier is a false report, the total score of the supplier will be subtracted a relatively large score directly, e.g., 10 scores, without considering the scores of other items.

In some embodiments, the restricted-substance management module 10 further comprises a query module 108. The query basis includes: query according to the product model, query according to the detection report, query according to the component information, query according to the supplier etc., the system can set the interface according to the included equerry manner, so as to facilitate the administrator account to perform query. The product model query module displays all the data. The administrator account can select any product model to check all accessory information and report data under this model. The detection report query module displays all the uploaded detection reports. The administrator account can input any of the report number, the component number, the supplier name, the detection department of the detection report to perform query. The component information query module displays information such as the component number, state, description, supplier, supplier name, manufacturer, manufacture name, creation time of all components. The administrator account can query the report through information such as the state (to be declared, to be checked, rejected, approved), the component number, the detection date.

In some embodiments, the restricted-substance management module 10 further comprises a mineral investigation module 109. The mineral investigation module is used for investigating some predetermined metals to be investigated, for example, the sources of metals such as Au, Ta, W and Sn that are explicitly required to be disclosed by the laws and regulations of some countries. For example, according to the system setting, the supplier needs to disclose in the system the smelting plant information regarding some predetermined metals to be investigated in the raw material, whether the raw material is purchased from the accepted smelting plant, the accepted smelting plant information is built in the system, the supplier can make selection directly. The content and the format of the filling information can make reference to the standard format of EICC, for the convenience of the administrator to check according to the international standard format and summarize the results for the client.

In some embodiments, the carbon footprint module 20 comprises a data collection module 201, a third party auditing tool 202 and a carbon footprint analysis module 203. The data collection module is configured to collect raw material and production process data related to the carbon footprint calculation, which requires the supplier to provide information such as the weight of the accessory, the material, the distance between the current position (the product manufacturing place) and the accessory manufacturing place, the transport manner of the accessory, whether the accessory is recyclable. Such information can also be obtained from the supplier declaration module 105 and can also be obtained from the investigation interface 106.

The third party auditing tool 202 is set with respect to the carbon footprint authentication of the country or the organization. When the user (e.g., the product manufacturing enterprise) applies for the carbon footprint authentication of this country or organization, it is convenient for the auditor of this country or organization to query the carbon footprint related data of the user.

The carbon footprint analysis module 203 builds in a carbon footprint calculating tool. The user can import the BOM. The system establishes a product life cycle model automatically, and calculates the carbon footprint based on the row material and production process data collected by the data collection module 201 and the data in the database 30. The database 30 is required to store the carbon emission basic data of the basic energy sources of the country including the electric power, the waterpower, the fossil energy etc. The calculation result is displayed by the result analysis module. The result analysis module not only displays the total result of the carbon footprint, but also analyzes the carbon footprint of each production activity, and analyzes the contribution of each accessory in the form of a diagram, so as to point out clearly the direction of carbon emission reduction efforts for the system user.

It should be noted that the green product management system in one or more embodiments of this disclosure sets different user rights due to different users, and can set different login options based on different users. For example, the responsible personnel for environmental protection of the company has an administrator account. The administrator account has the rights of releasing a notice, initiating a substance investigation, auditing the report, supplier rating, querying the report etc. The supplier has the rights of uploading the report, downloading the report, establishing an accessory database, viewing the notice etc.

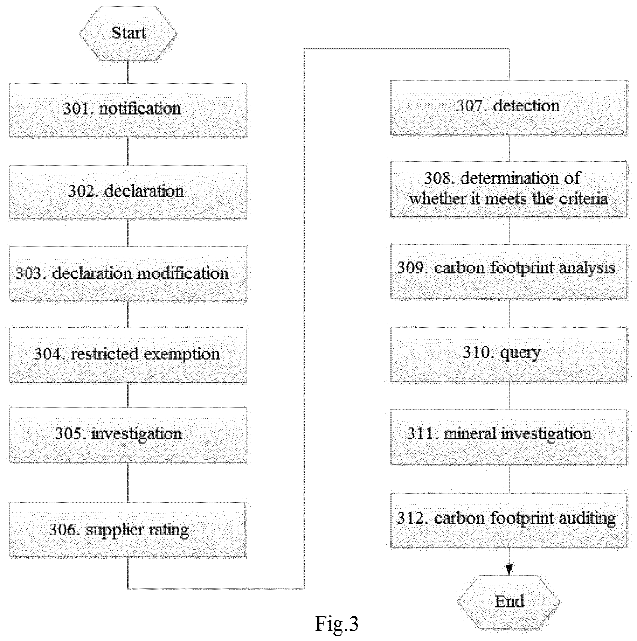

Based on the green product management system of the above embodiment, the enterprise can carry out the management and control of poisonous and harmful substances into the whole process of development and production of the product in conjunction with the requirement of IECQ-HSPM restricted-substance management system. For example, as shown in Fig. 3, there are many phases in the whole process of the product development.

In the supplier lead-in phase, when the lead-in department of the supplier leads in a new supplier, the enterprise signs an Environmental Compliance Statement with the supplier, and performs on-site auditing to the documents in terms of the environmental protection management capability of the supplier. In the project development phase, after the sales department and the product planning department communicate with the target client, a Product Plan is finished, the Plan reflects the restricted substance requirements of the target client. If the client has special restricted substance control requirements, it should be carried out in the whole process of the subsequent development. This can be carried out by configuring restricted-substance related predetermined criteria of the green product management system. In the product development phase, the restricted substance control requirements of the client should be taken into account sufficiently. The restricted substance control requirements to be considered should be specified in the relevant documents in the initial phase of development. The design of the label should meet the relevant requirement of environmental protection in the sales area. It should also be marked out in the completion report upon completion of the development whether the restricted substance requirements are concerned and carried out in the whole development phase. After completion of the development, the product BOM needs to be outputted generally, and it should be confirmed that all materials in the BOM have the restricted substance test report and the report meets the requirement of the buyer. In the new product customer certification phase, the received restricted substance environmental requirement of the client is compared with the internal management and control requirement, if it is found to be inconsistent, the materials of the internal product should be changed. The internal management and control requirement can be carried out by configuring restricted-substance related predetermined criteria of the green product management system. However, the predetermined environmental criteria are updated continuously with the change of the client requirements. In the material purchasing phase, when the material purchasing department performs purchasing, it should be specified in the purchasing order that is sent to the supplier that the supplier should meet the restricted-substance related predetermined criteria, so as to ensure that all suppliers have confirmed that the restricted substances of the product meet the predetermined criteria before delivery. All the above are phases before production, in these phases, the supplier can use the supplier interface of the green product management system, and can use the function of the declaration module. The investigation module, the supplier rating module and query module, the mineral investigation module of the green product management system all can be used.

In the warehousing phase, the raw materials should be checked. The incoming quality check of the raw material includes HSF detection, as stated above, the product can be scanned by means of some auxiliary devices such as XRF in the case of not destroying the product. If there is no detection device, the precision chemistry test report of the raw material should also be confirmed, so as to ensure that the restricted substance containing condition of the raw material has been checked before being put into production. In the production process of the product, restricted substance evaluation should be performed to all auxiliary consumptive materials in contact with the product, so as to ensure that no new pollution is brought to the product in the production process. When a new auxiliary consumptive material is imported, it should be noted that the product using the auxiliary consumptive material that is not certified cannot be confused with normal products, which should be treated differently. The periodic restricted substance examination to the finished product can be performed by means of devices or by external tests. The above phases in the production can use the modules of the green product management system according to one or more embodiments of this disclosure.

After the sale of the product, at the end of the product life cycle, the product should be recycled according to the recycling regulations on the discarded product at that place. The recycling process can be performed independently, if it needs to entrust a recycling mechanism, the related information of product recycling should be provided. In this phase, for example, some modules e.g., the supplier interface, the declaration module, the investigation module, the supplier rating module and the query module, the mineral investigation module of the green product management system can still be used.

The nine phases stated above are critical phases in the product production system. The perfect performance of the restricted substance control and the information collection in these phases can manage the environmental properties of the product effectively, so as to avoid the restricted substance exceeding risk. Although the nine phases require many artificial operations, the green product management system according to this disclosure can provide reliable data support.

Fig. 3 exemplarily draws a working flow chart of green product management according to one or more embodiments of the present application.

The green product management method as shown in Fig. 3 is correspondingly used in a green product management system according to one or more embodiments of the present application. The green product management method comprises: at step 307, detecting restricted-substance containing condition of a raw material and all auxiliary consumptive materials contacted in a production process of a product. The detection for example can be performed using an X-ray fluorescence analyzer being capable of identifying whether there is a restricted substance and obtaining a content of each restricted substance. For example, the green product management system according to one or more embodiments of this disclosure can grab the XRF detection result automatically and collect the detection data within a period of time. The incoming XRF detection data grabbed by the system can be managed according to the accessory name and the test time, and a pie chart can be drawn according to the detection result of each accessory for the administrator account to query. The administrator account can select a period of time, so as to enable the system to output all test results and the test result tendency chart within this period of time. The administrator can query the detection results of all accessories under the bill of material (BOM) of a product of a certain model, and can derive all detection data. The data grabbed by the system includes batch number of incoming product, operator, factory, test time. The administrator account can select these key information for query so as to provide management basis for the incoming quality management personnel.

At step 308, a computer device, for example, a green product management system according to one or more embodiments of this disclosure, determines, according to a restricted-substance related predetermined criterion, and based on a detection result of the detection module and data in the database, whether the product conforms to the restricted-substance related predetermined criterion.

Alternatively, at step 301, the enterprise can use the computer device, e.g., the green product management system according to this disclosure to perform notification to the user particularly the supplier, for example, releasing a notice for the supplier to download, and can implement the function of collecting information such as the download condition of the supplier, and can send a reminder mail to the suppliers who do not view the notice to remind them. Alternatively, after the notice is released, the computer device, e.g., the green product management system according to one or more embodiments of this disclosure can send a notification mail to the supplier mailbox automatically, the content of the mail is exactly the content of the notice. Generally speaking, the publisher of the notice has the rights to delete and edit. The content of the notice can include laws and regulations as well as relevant industry events, which are pushed to the supplier in classifications of "regulation" and "notification" respectively.

Alternatively, at step 302, the supplier uses the computer device, e.g., the green product management system according to one or more embodiments of this disclosure to declare the data required by the restricted substance management and/or the data required by the carbon footprint analysis. Exemplarily and specifically, the suppliers can create their own new accessories at this step, and input corresponding information and report under each new accessory, for example, the components and the disassembled accessories and homogenous accessories thereof. The supplier needs to use the computer device to declare the types, the types including: homogeneous accessories (homogenous substances that can be obtained without being disassembled again); primary disassembly accessories (accessories that can obtain homogeneity by being disassembled once); secondary disassembly accessories (accessories that can obtain homogeneity by being disassembled twice). The supplier needs to declare the weight, the name, the number of the component accessories. If the supplier is the agent, the agent needs to declare the name of the manufacturer. The supplier needs to declare the name and weight of the sub-components, and the attributes of the homogeneity obtained from final disassembly. After the accessory is disassembled into homogeneity, the supplier has to declare information such as the homogenous material name, the homogenous material subdivision, the homogenous material type, whether it is a recyclable material, the material weight, whether the material belongs to the base or the coating, the actual test content of each restricted substance. The supplier declares whether it is a recyclable material in order to take it as the data basis for the carbon footprint calculation and the recycling information. The supplier has to choose whether the material is the coating or the base, for the convenience of the auditor to determine whether complete information has been provided.

In one or more embodiments, the ingredients proportion declared by the supplier needs to exceed 95%, in order to protect technical secret, a small part of confidential ingredients is allowed. For this part of exceeding 95%, the supplier can provide its name, CAS No., EC No. etc., for specifying the specific substances, and can also declare its content percentage. In addition, the supplier can also query the specific information of the ingredient and reset the information by inputting the ingredient name or CAS No..

The administrator needs to manage the CAS No. and the EC No. of all controlled substances. When the ingredients declared by the supplier include the controlled substances, the system has the prompting function when the administrator account is checking the CAS No, for example, the displayed font color or size will be highlighted.

Alternatively, at step 304, the supplier is allowed to select restricted exemption to the predetermined restricted substances that have exceeds the limit. When a certain restricted substance inputted by the supplier fails to comply with the provisions, the supplier needs to select a corresponding exemption term, and update the test report and the corresponding material specification if necessary, for the auditor to evaluate the material based on the actual report. Generally, for exemption of the prohibited substance, it is required to provide the test report of the substance, and for exemption of the declared substance, it is not required to provide the test report of the substance, however, it is required to declare in the material specification whether this declared substance is contained and the content thereof.

Alternatively, the supplier declares the declaration data that need to be modified again at step 303. When the supplier changes the material, the information of the accessory that has been approved also needs to be modified. The supplier can modify the related information of the accessory that has been approved and submit it again through the operating system. After the supplier modifies the information of the accessory that has been approved, the system will inform the administrator account of the related information automatically, and make special marks to the accessory until the accessory is submitted again.

Alternatively, at step 305, the enterprise can use the computer device, e.g., the green product management system according to one or more embodiments of this disclosure to issue an investigation request to the supplier and check a response from the supplier by an administrator. The setting of this step can facilitate the enterprise to perform restricted substance investigation at the supply chain before certain laws and regulations come into force. The enterprise inputs the title of the investigated information and the description of the investigated content. Further, the CAS No. option of the investigated substance can also be inputted so as to specify the specific investigated substance. The investigated content can be modified at any time before the official release. After the enterprise edits the investigated content, the investigated content can be released officially. Then, the computer device, e.g., the green product management system according to one or more embodiments of this disclosure sends an investigation notification mail to each account under all suppliers according to the contact information of the suppliers as default. The system performs statistics to the suppliers that have received the investigation and the suppliers that have not respond to the investigation automatically. The enterprise can view the information of the related suppliers.

Alternatively, at step 306, the enterprise uses the computer, e.g., the green product management system according to one or more embodiments of this disclosure to rate the suppliers. The rating standards used in this step include the raw material, credibility, historical detection result and/or service of the supplier. The administrator can use the statistic function of the system to evaluate the performance of the supplier as the annual evaluation criteria of the supplier. In an example, the evaluation index can include six dimensions of material risk level, supplier qualification, investigation response speed, report veto ratio, XRF feed exceeding record, whether a false report is provided. The specific evaluating manner has been expounded with reference to Fig. 1, which will not be repeated here.

Alternatively, the step 310 includes a query step, in which the computer device, e.g., the green product management system according to one or more embodiments of this disclosure can be used to perform query based on the keywords. The types of the keywords include: product model, detection report, component information, supplier etc. The query with respect to the product model can obtain all data. The user can select any product model to check any accessory information and report data under this model. The query with respect to the detection report can obtain nay uploaded detection report. The user can input any of the report number, the component number, the supplier name, the detection department of the detection report to perform query. The query with respect to the component information can obtain information such as the component number, state, description, supplier, supplier name, manufacturer, manufacture name, creation time of all components. The administrator account can query the report through information such as the state (to be declared, to be checked, rejected, approved), the component number, and the detection date. The query can be performed at any time independent of the phases of production of the product (e.g., before, in and after the production).

Alternatively, at step 311, it further comprises a mineral investigation step, in which the supplier uses the green product management system according to one or more embodiments of this disclosure to provide the smelting plant information regarding some predetermined metals to be investigated in the raw material, e.g., the four metals of Sn Ta, W and Au. The content and the format provided by the supplier can make reference to the standard format of EICC, for the convenience of checking and summarizing the results according to the international standard format.

At step 309, the raw material and production process data related to the carbon footprint calculation is collected, which requires the supplier to provide information such as the weight of the accessory, the material, the distance between the current position (the product manufacturing place) and the accessory manufacturing place, the transport manner of the accessory, whether the accessory is recyclable. Such information can also be obtained from the data declared by the supplier and can also be obtained from the investigation. At step 310, the carbon footprint of each production process and the carbon footprint of each component of the product are obtained based on the collected raw material and production process data and combined with the data in the database 30 in Fig. 1. In an example, the user can import the BOM. The system establishes a product life cycle model automatically, and calculates the carbon footprint based on the collected raw material and production process data and combined with the data in the database 30 in Fig. 1 (wherein the database 30 is required to store the carbon emission basic data of the basic energy sources of the country including the electric power, the waterpower, the fossil energy etc.). The calculation result is displayed by the result analysis module. The result analysis module not only displays the total result of the carbon footprint, but also analyzes the carbon footprint of each production activity, and analyzes the contribution of each accessory in the form of a diagram, so as to point out clearly the direction of carbon emission reduction efforts for the system user.

Alternatively, at step 312, it further comprises a step of performing query to the carbon footprint related data by a third party. This step is set with respect to the carbon footprint authentication of the country or the organization. When the user applies for the carbon footprint authentication of this country or organization, it is convenient for the auditor of this country or organization to query the carbon footprint related data of the user.

It should be particularly noted that the above steps discussed in conjunction with Fig. 3, except for those that have to take the result of the preceding step as the execution premise, should not define the execution order nor define the executed number of times.

The green product management system and method according to the present application can provide whole life cycle and systematic environmental monitoring and protection, and can provide large-scale reliable management in complex situations for the enterprise, so as to accurately ensure that the product meets the standards.

Although the present application has been described in conjunction with the specific embodiments, the skilled person in the art would understand that various changes and modification can be made, and equivalent replacement can be made to the elements thereof without departing from the real scope of the present application. In addition, many modifications can be made to enable the teaching of the present application to be adapted to particular situations without departing its core scope. Therefore, the present application is not limited to the particular embodiments disclosed here as optimal modes designed for carrying out the present application, on the contrary, the present application includes all embodiments that fall within the scope of the Claims attached.

## Claims

1. A green product management system, **characterized by** comprising a database, a restricted-substance management module and a carbon footprint module, wherein:
the database is configured to store data required by the restricted-substance management module and the carbon footprint module;
the restricted-substance management module comprises:
a detection module, configured to detect restricted-substance containing condition of a raw material and all contacted auxiliary consumptive materials in a production process of a product; and
a determination module, configured to determine, according to a restricted-substance related predetermined criterion, and based on a detection result of the detection module and data in the database, whether the product conforms to the restricted-substance related predetermined criterion; and
the carbon footprint module comprises:
a data collection module, configured to collect raw material and production process data related to carbon footprint calculation; and
a carbon footprint analysis module, configured to obtain, based on the collected raw material and production process data, and combined with the data in the database, a carbon footprint in each production process and a carbon footprint of each component of the product.

2. The green product management system as claimed in claim 1, **characterized in that** the detection module is an X-ray fluorescence analyzer being capable of identifying whether there is a restricted substance and obtaining a content of each restricted substance.

3. The green product management system as claimed in claim 1, **characterized in that** the data required by the restricted-substance management module comprises an accessory disassembly attribute, an accessory weight, an accessory name, a homogeneous material weight after disassembly, a homogeneous material name after disassembly, base and coating properties, the data required by the carbon footprint module comprises a distance between a product manufacturing place and an accessory manufacturing place, a transport manner of the accessory, whether the accessory is recyclable, carbon emission base data of basic energy sources in producing countries of the accessory and the product.

4. The green product management system as claimed in claim 1, **characterized in that** the restricted-substance management module further comprises a notification module, configured to release a notice to a supplier.

5. The green product management system as claimed in claim 1, **characterized in that** the restricted-substance management module further comprises a supplier interface, comprising an unread mail component, an unread notice component, a detection report update, a to-declare component, a company basic information component, a rejected component and a pending questionnaire component.

6. The green product management system as claimed in claim 1, **characterized in that** the restricted-substance management module further comprises a declaration module, configured to declare by the supplier data required by the restricted-substance management module and data required by the carbon footprint analysis module.

7. The green product management system as claimed in claim 1, **characterized in that** the restricted-substance management module further comprises an investigation interface, configured to issue an investigation request to the supplier and check a response from the supplier by an administrator.

8. The green product management system as claimed in claim 1, **characterized in that** the restricted-substance management module further comprises a query module, configured to perform query based on a keyword, and display a different query interface based on a type of the keyword, wherein the type of the keyword includes: product model, detection report, component information, supplier.

9. The green product management system as claimed in claim 1, **characterized in that** the restricted-substance management module further comprises a mineral investigation module, configured to facilitate the supplier to provide smelting plant information regarding a predetermined metal to be investigated.

10. The green product management system as claimed in claim 1, **characterized in that** the carbon footprint module further comprises a third party auditing tool, configured to perform query to carbon footprint related data by a third party.

11. A green product management method for performing green product management using a computer system, the computer system comprising a database, **characterized in that** the green product management method comprises:
detecting restricted-substance containing condition of a raw material and all auxiliary consumptive materials contacted by the restricted substance in a production process of a product;
determining, according to a restricted-substance related predetermined criterion, and based on a detection result and data in the database, whether the product conforms to the restricted-substance related predetermined criterion;
collecting raw material and production process data related to carbon footprint calculation; and
obtaining, based on the collected raw material and production process data, and combined with the data in the database, a carbon footprint in each production process and a carbon footprint of each component of the product; wherein the database is configured to store data required by the restricted-substance management and the carbon footprint analysis.

12. The green product management method as claimed in claim 11, **characterized in that** the data required by the restricted-substance management comprises an accessory disassembly attribute, an accessory weight, an accessory name, a homogeneous material weight after disassembly, a homogeneous material name after disassembly, base and coating properties, the data required by the carbon footprint analysis comprises a distance between a product manufacturing place and an accessory manufacturing place, a transport manner of the accessory, whether the accessory is recyclable, carbon emission base data of basic energy sources in producing countries of the accessory and the product.

13. The green product management method as claimed in claim 11, **characterized in that** the detecting is performed using an X-ray fluorescence analyzer being capable of identifying whether there is a restricted substance and obtaining a content of each restricted substance.

14. The green product management method as claimed in claim 11, **characterized by** further comprising a step of notifying, in which step a computer releases a notice to a supplier.

15. The green product management method as claimed in claim 11, **characterized by** further comprising a step of declaring, in which step the computer system declares data required by restricted-substance management and data required by carbon footprint analysis.

16. The green product management method as claimed in claim 11, **characterized by** further comprising a step of investigating, in which step an administrator issues an investigation request to the supplier and checks a response from the supplier.

17. The green product management method as claimed in claim 11, **characterized by** further comprising a step of querying, in which step query is performed based on a keyword, and a different query interface is displayed based on a type of the keyword, wherein the type of the keyword includes: product model, detection report, component information, supplier.

18. The green product management method as claimed in claim 11, **characterized by** further comprising a step of mineral investigating, wherein the supplier provides smelting plant information regarding a predetermined metal to be investigated.

19. The green product management method as claimed in claim 17, **characterized in that** the query step can take place before, in and after the production.

20. The green product management method as claimed in claim 11, **characterized by** further comprising a step of performing query to the carbon footprint related data by a third party.
